# EUROPEAN PATENT APPLICATION

(11) **EP 4 439 819 A1**
(43) Date of publication of application: **02.10.2024**
(21) Application number: 23164400.6
(22) Date of filing: 27.03.2023
(51) Int. Cl.: H01M 50/207, H01M 50/244, H01M 50/256, H01M 50/262, H01M 50/296

(54) **BATTERY AND BATTERY HOLDER**

(71) Applicant: Koninklijke Philips N.V., 5656 AG Eindhoven (NL)
(72) Inventor: MESZAROS, Julia, 5656 AG Eindhoven (NL); KUEHNEL, Thomas, 5656 AG Eindhoven (NL); RENNER, Dieter, 5656 AG Eindhoven (NL)
(74) Representative: Philips Intellectual Property & Standards

(57) **Abstract**

The present invention relates to a battery (1) that is configured to allow insertion of the battery into a battery holder (100, 200, 300) in two or more different directions. The battery has a housing (20); one or more battery cells (21) arranged within the housing; an electrical connector (30) comprising a plurality of contact elements (31), the electrical connector being arranged at an edge of the battery between a front surface (10) and a top surface (12) of the battery and being configured to allow electrical contact of counterpart contact elements of a counterpart connector (130 arranged within the battery holder with the contact elements from two different directions; and one or more bearing surface elements (40) arranged at the front surface (10) of the battery and configured to mate with one or more counterpart bearing surface elements (140) of the battery holder and to prevent substantial movement of the battery in a direction perpendicular to the top surface in mated condition.

## Description

### FIELD OF THE INVENTION

The present invention relates to a battery that is configured to allow insertion of the battery into a battery holder. The present invention relates further to a corresponding battery holder.

### BACKGROUND OF THE INVENTION

Patient monitors and many other devices may need a battery to operate or as a backup power source in case of power failures. There are different ways to connect a battery into the patient monitor. Requirements for such batteries are ease of use, secure connection, and robustness of the battery. The housing of the batteries has certain characteristics enabling them to connect to the respective device, e.g. to patient monitors, and to fulfil these requirements.

There are a lot of universal batteries having a standardized housing on the market that can be used in corresponding battery holders. Many devices, including patient monitors, require special batteries, for instance due to certain power requirements or since only certain limited space is available for holding the battery. It is desired, however, to be able to use such special batteries in multiple devices and/or to provide a platform battery which can be used for multiple and future devices, independent from the insertion concept of the battery into the battery holder of the device.

### SUMMARY OF THE INVENTION

It is an object of the present invention to provide a battery and a corresponding battery holder allowing use of the battery in multiple devices, independent from the insertion concept of the battery into the battery holder of the device.

In a first aspect of the present invention a battery is presented that is configured to allow insertion of the battery into a battery holder in two or more different directions, the battery having:
- a housing;
- one or more battery cells arranged within the housing;
- an electrical connector comprising a plurality of contact elements, the electrical connector being arranged at an edge of the battery between a front surface and a top surface of the battery and being configured to allow electrical contact of counterpart contact elements of a counterpart connector arranged within the battery holder with the contact elements from two different directions; and
- one or more bearing surface elements arranged at the front surface of the battery and configured to mate with one or more counterpart bearing surface elements of the battery holder and to prevent substantial movement of the battery in a direction perpendicular to the top surface in mated condition.

In a further aspect of the present invention a battery holder is presented that is configured to allow insertion of a battery as disclosed herein into the battery holder in two or more different directions, the battery holder having:
- a battery compartment configured to hold the battery;
- an electrical counterpart connector comprising a plurality of contact elements, the electrical counterpart connector being arranged at a rear surface of the battery compartment, a bottom surface of the battery compartment or an edge of the battery compartment between the rear surface, a side surface of the battery compartment and the bottom surface and being configured to make electrical contact of the counterpart contact elements with contact elements of a connector of the battery when the battery is inserted into the battery compartment; and
- one or more counterpart bearing surface elements arranged at the rear surface of the battery compartment and configured to mate with one or more bearing surface elements of the battery and to prevent substantial movement of the battery in a direction perpendicular to the bottom surface in mated condition.

The present invention is based on the idea to enable a horizontal insertion by sliding into the compartment, a vertical insertion by a straight translation movement and a rotational insertion. Hence, even if the battery holder (also called battery compartment) is different in various devices and requires a different insertion direction of the battery into the battery holder, the same battery can be used.

The electrical connector of the battery and the electrical counterpart connector of the battery holder are located and designed to enable a reliable electrical connection between their respective contact elements despite the direction in which they are brought in contact.

The one or more bearing surface elements of the battery and the one or more counterpart bearing surface elements of the battery holder are located and designed to enable a reliable mechanical connection and holding of the battery in the battery holder, i.e., prevent an intended movement of the battery out of the battery holder in certain direction(s). They may particularly be configured to carry the battery weight in the front area in vertical direction (substantially parallel to the front surface and substantially perpendicular to the top and bottom surfaces) and may be used for positioning of the battery in the device.

There are multiple embodiments of the configuration of the various means of the battery and battery holder, and one or more additional elements may be provided. It shall be noted that the battery holder may generally be configured such that it has one or more counterpart elements that interact with the corresponding elements of the battery and that allow insertion of the battery into the battery holder in the desired insertion direction. Thus, the battery holder may generally have the same or similar embodiments as disclosed herein for the battery and as defined in the dependent claims of claim 1 directed to the battery.

In an embodiment the one or more bearing surface elements are configured as one or more recesses and/or protrusions arranged within and/or at the front surface at a distance from the top surface and adjacent to or at an edge between the front surface and a side surface of the battery. Such a location and configuration ensures the desired holding of the battery within the battery holder.

There may particularly one or more recesses and/or protrusions that extend up to a bottom surface and/or the top surface and/or a side surface of the battery. Such an "open" construction of the one or more recesses and/or protrusions may make it more easier to couple them with the corresponding counterpart bearing surface element(s).

In another embodiment the battery may further comprise one or more locating surface elements arranged at a top surface and/or a side surface of the battery and configured to mate with one or more counterpart locating surface elements of the battery holder and to prevent substantial movement of the battery in a direction perpendicular to the front surface in mated condition. The one or more locating surfaces may particularly be used for positioning the battery in horizontal direction in order to reduce tolerances when mating the battery with the battery holder.

The one or more locating surface elements may, for instance, be configured as one or more steps and/or recesses and/or protrusions arranged within or at the top surface and/or a side surface at a distance from the front surface and adjacent to or at an edge between the top surface and a side surface.

In another embodiment the battery may further comprise one or more prepositioning elements arranged at the edge of the battery between the front surface and the top surface of the battery and configured to mate with one or more counterpart prepositioning elements of the battery holder before the connector of the battery mates with the counterpart connector of the battery holder when inserting the battery into the battery holder. The one or more prepositioning element may particularly be used to preposition the battery to facilitate mating of the electrical connector with the electrical counterpart connector.

The one or more prepositioning elements may, for instance, be configured as one or more recesses and/or protrusions arranged adjacent to the connector and at a distance from the side surfaces of the battery. Alternatively, the side surfaces may be used as prepositioning elements.

In another embodiment the battery may further comprise one or more poka yoke elements arranged at one or more surfaces of the battery and configured to mate with one or more counterpart poka yoke elements of the battery holder and to prevent incorrect insertion of the battery into the battery holder. The poka yoke elements may further prevent substantial movement of the battery in a direction perpendicular to a side surface and/or perpendicular to the bottom surface of the battery in mated condition. The one or more poka yoke elements thus ensure that the battery can be inserted into the battery holder only in the correct orientation when e.g., using a horizontal insertion direction.

The one or more poka yoke elements may be arranged at the top surface and/or a bottom surface and/or a side surface of the battery, extending in a direction perpendicular to the front surface of the battery. In another embodiment the one or more poka yoke elements may be configured as one or more recesses and/or protrusions arranged within or on top of the top surface and/or the bottom surface and/or the side surface and extending from the front surface up to a rear surface of the battery or ending before the rear surface. It shall be noted that one or more of the bearing surface elements and/or the prepositioning elements may additionally be used as poka yoke elements as well.

In another embodiment the battery may further comprise one or more supporting surface elements arranged at a rear surface and/or at a bottom surface and/or at a side surface of the battery (preferably but not mandatorily adjacent to the rear surface) and configured to mate with one or more counterpart supporting surface elements of the battery holder and to prevent substantial movement of the battery in a direction perpendicular to the bottom surface and/or a side surface of the battery in mated condition. The one or more supporting surface elements may carry the battery weight in the back area in vertical direction and may be used for positioning of the battery in the battery holder.

The one or more supporting surface elements may e.g., be configured as one or more recesses and/or protrusions and/or inclined surfaces.

In another embodiment the battery may further comprise one or more pull out elements arranged at a rear part of the battery and configured to pull the battery out of the battery holder. The one or more pull out elements may e.g., be arranged at the rear surface or at another surface close to the rear surface so that it is accessible from the rear side of the battery. In an embodiment it may include a pull out strap that is designed to enable multi-directional usage. Any kind of fixation or arrangement of the pull out elements to the battery may be used, such as by use of glue, screws, etc.

Generally, the battery may have any shape. Preferably, the battery has a substantially cuboid or prismatic shape or a shape of a parallelepiped or a frustum, e.g., having a base area in the form of a trapezoid or a parallelogram.

### BRIEF DESCRIPTION OF THE DRAWINGS

These and other aspects of the invention will be apparent from and elucidated with reference to the embodiment(s) described hereinafter. In the following drawings
Fig. 1 shows different perspective views of a first embodiment of a battery according to the present invention.
Fig. 2 shows a side view of the first embodiment of the battery and a corresponding embodiment of a battery holder according to the present invention for rotational insertion.
Fig. 3 shows a perspective side view of the first embodiment of the battery and a corresponding embodiment of a battery holder according to the present invention for horizontal insertion.
Fig. 4 shows a perspective side view of the first embodiment of the battery and a corresponding embodiment of a battery holder according to the present invention for vertical insertion.
Fig. 5 shows a perspective side view of a second embodiment of a battery according to the present invention having a different embodiment of an electrical connector.
Fig. 6 shows perspective front views of embodiments of a battery according to the present invention having different embodiments of bearing surface elements.
Fig. 7 shows perspective top views of embodiments of a battery according to the present invention having different embodiments of locating surface elements.
Fig. 8 shows perspective rear views of embodiments of a battery according to the present invention having different embodiments of supporting surface elements.
Fig. 9 shows a perspective rear view of another embodiment of a battery according to the present invention having an unlocking protection element.

### DETAILED DESCRIPTION OF EMBODIMENTS

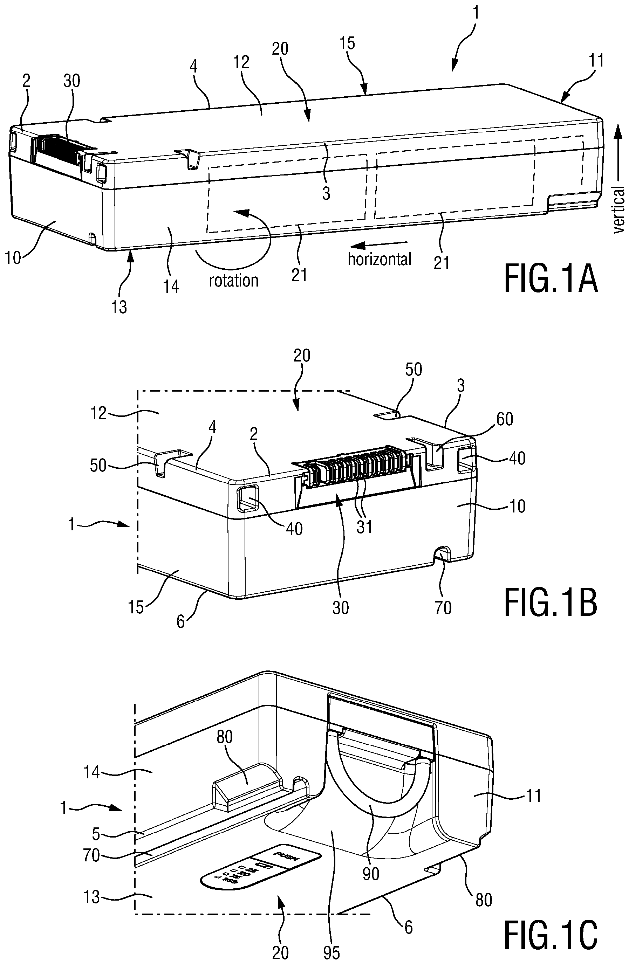

Fig. 1 shows different perspective views of a first embodiment of a battery 1 according to the present invention. Fig. 1A shows a perspective side view, Fig. 1B shows a perspective front view, and Fig. 1C shows a perspective rear view. As shown in Fig. 1A, the battery 1 has a cuboid shape having a front surface 10, a rear surface 11, a top surface 12, a bottom surface 13, a left side surface 14 and a right side surface 15.

The battery 1 is, in this embodiment, configured to be inserted in a corresponding battery holder (not shown) of an electrical device (e.g., a patient monitor) in different directions, depending on the kind of insertion required by the respective battery holder. Some battery holders require insertion of the battery by horizontal insertion (e.g., by a sliding or translational horizontal movement), other battery holders require insertion of the battery by vertical insertion (e.g., by sliding or translational vertical movement), and still other battery holders require insertion of the battery by rotational insertion.

The battery 1 has a housing 20 and one or more battery cells 21 arranged within the housing 20. An electrical connector 30 is provided that comprises a plurality of contact elements 31 (e.g., pins, pads, spring contacts, knife contacts, etc.). The electrical connector is arranged at an edge 2 of the battery 1 between the front surface 10 and the adjacent top surface 12 of the battery 1. It is configured to allow electrical contact of counterpart contact elements (e.g., counterpart pins, pads, spring contacts, knife contacts, etc.) of a counterpart connector (not shown) arranged within the battery holder with the contact elements 31 from two different directions, i.e., irrespective of the insertion direction of the battery 1 into the battery holder, electrical contact between the electrical connector 30 and the counterpart connector can be established.

To enable insertion of the battery into the battery holder by the required insertion movement, one or more bearing surface elements 40 are arranged at the front surface 10 of the battery 1. They are configured to mate with one or more counterpart bearing surface elements (not shown) of the battery holder and prevent substantial movement of the battery 1 in a direction perpendicular to the top surface 12 in mated condition. In this embodiment, two bearing surface element 40 are provided as recesses within the front surface 10 adjacent to the edge 2, one next to the left side surface 14 and one next to the right side surface 15. The bearing surface element(s) 40 can be used to carry the battery weight in the front area in vertical direction. They can further be used for positioning of the battery 1 in the battery holder.

The embodiment of the battery 1 illustrated in Fig. 1 comprises a number of further (optional) elements. In other embodiments of the battery, none or only single ones or a set of these optional elements may be provided to further support safe and simple insertion of the battery 1 into the battery holder and removal out of the battery holder, and to enable secured electrical contacting.

One or more locating surface elements 50 are arranged at the top surface 12 of the battery 1. They are configured to mate with one or more counterpart locating surface elements (not shown) of the battery holder and prevent substantial movement of the battery 1 in a direction perpendicular to the front surface 10 (i.e., in horizontal direction) in mated condition. In this embodiment, two locating surface elements 50 are provided as recesses within the top surface 12 at the edges 3, 4 between the top surface 12 and the respective side surface 14, 15. The locating surface element(s) 50 can be used for positioning the battery 1 in horizontal direction in order to reduce tolerances when mating the battery with the battery holder.

One or more prepositioning elements 60 are arranged at the edge 2 of the battery between the front surface 10 and the top surface 12 of the battery. They are configured to mate with one or more counterpart prepositioning elements (not shown) of the battery holder before the connector 30 of the battery 1 mates with the counterpart connector of the battery holder when inserting the battery 1 into the battery holder. In this embodiment, one prepositioning element 60 is provided as recess at the edge 2 between the connector 30 and the edge 3. The prepositioning element(s) can be used to preposition the battery 1 to facilitate mating of electrical connector 30 with the counterpart connector of the battery holder.

One or more poka yoke elements 70 are arranged at one or more surfaces of the battery 1. They are configured to mate with one or more counterpart poka yoke elements (not shown) of the battery holder and prevent substantial movement of the battery 1 in a direction perpendicular to a side surface 14, 15 and/or perpendicular to the bottom surface 13 of the battery 1 in mated condition. In this embodiment one poka yoke element 70 is provided as longitudinal recess at the bottom surface 13 of the battery 1. It extends along the complete length of the bottom surface 13 from the front surface 10 to the rear surface 11. The poka yoke element(s) can be used to ensure that the battery 1 can be inserted into battery holder only in correct orientation, particularly when using the horizontal insertion direction. For other insertion directions one or more of the bearing surface elements 40 and/or the locating surface element(s) 50 and/or the prepositioning elements 60 may provide the function of a poka yoke element instead or in addition.

One or more supporting surface elements 80 are arranged at the rear surface 11 (and/or at a side surface 14, 15 and adjacent to the rear surface 11) of the battery 1. They are configured to mate with one or more counterpart supporting surface elements (not shown) of the battery holder and to prevent substantial movement of the battery 1 in a direction perpendicular to the bottom surface 13 and/or a side surface 13, 14 of the battery in mated condition. In this embodiment, two supporting surface elements 80 are provided as inclined surface at the edges 5, 6 between the bottom surface 13 and the respective side surface 14, 15 and adjacent to the rear surface 11. The supporting surface(s) can be used to carry the battery weight in the back area in vertical direction (and/or a direction perpendicular to the side surfaces 14, 15) and to position the battery 1 in the battery holder.

One or more pull out elements 90 are arranged at the rear surface 11 of the battery 1. They are configured to pull the battery 1 out of the battery holder. In this embodiment, a single pull out strap 90 is provided at the rear surface 11. The pull out element(s) 90 can be designed to enable multi-directional usage, i.e., to help removing the battery 1 out of the battery holder in the required removal direction, which is generally the opposition direction of the required insertion direction. In this embodiment an optional (maximized) grab space 95 is provided at the bottom surface 13 adjacent to the rear surface 11 to allow grabbing the one or more pull out elements 90 with one or more fingers. Other configurations of pull out element(s) may be used as well, such as a protruding or differently oriented strap that can be pushed to remove the battery out of the battery holder and that can be pushed aside for closing the battery compartment.

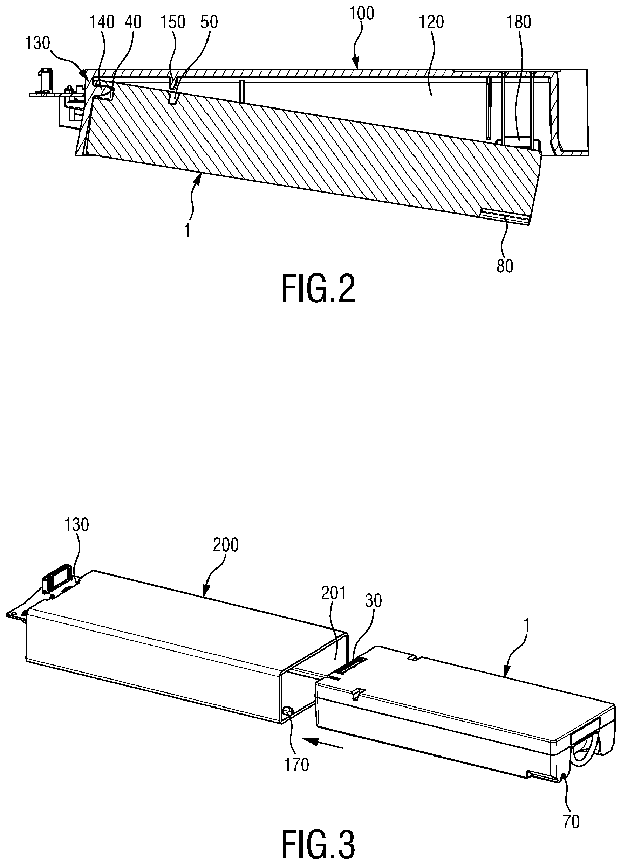

Fig. 2 shows a side view of the first embodiment of the battery 1 and a corresponding embodiment of a battery holder 100 according to the present invention for rotational insertion. The battery holder 100 has a battery compartment 120 that is configured to hold the battery 1. For inserting the battery 1 with a rotational movement, the two bearing surface elements 40 on the front surface 10 of the battery 1 are used for defining the rotation axis. Two counterpart bearing surface elements 140 (e.g., protruding flexing or stiff elements) of the battery holder 100 in the form of protruding elements are thereby received in the recesses representing the two bearing surface elements 40. The prepositioning element 60 ensures a smooth connection of the electrical connector 30 and its counterpart connector 130 in the battery compartment 100.

In the final (inserted) position, two snapping hooks 180 on the back end of the battery holder 100 fix the battery 1 in the end position using the two supporting surfaces 80. Due to the cutouts of the bearing surfaces 40, the prepositioning element 60 and the locating surface elements 50, which interact with counterpart locating surface elements 150 of the battery holder 100, the battery 1 cannot be inserted into this battery holder 100 in a different orientation than the direction shown in Fig. 2. These elements thus additionally provide a poka yoke function for this insertion direction.

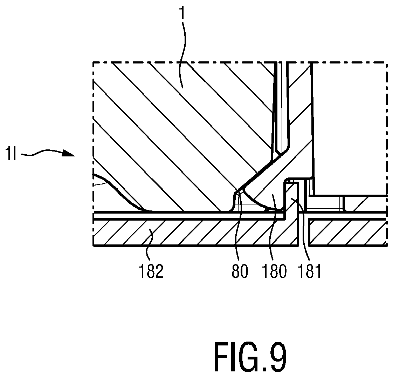

In final position, the snapping hooks 180 may be blocked by an additional element (e.g., a battery door) to make sure that low forces for battery insertion and removal are given while the battery stays in position during drop and shock impact when the battery holder is closed (see also Fig. 9).

Fig. 3 shows a perspective side view of the first embodiment of the battery 1 and a corresponding embodiment of a battery holder 200 according to the present invention for horizontal insertion. Using the horizontal insertion direction, the battery 1 can be sled into a slot formed battery holder 200. When inserting from right to left, the counterpart connector 130 is located at the left end of the battery holder 200 and mates with the battery, when it is fully inserted into the battery holder 200. By adding a small rib 170, representing a counterpart poka yoke element, at the bottom of the battery holder 200 (at the right hand side), beginning at the opening 201, the poka yoke element 70 of the battery 1 enables to insert the battery 1 only in the orientation as shown in Fig. 3. The other elements described with reference to Fig. 2 enabling the rotational insertion are not necessarily used for horizontal insertion and are configured so as not to disturb or preventing horizontal insertion. However, these other elements may be used for improving the positioning of the battery within the battery holder during and/or after insertion.

It shall be noted that the length and/or position of the small rib 170 can be different. For instance, the rib 170 may be continuous from the front end to the rear end of the battery holder, or it may be a short rib only, as long as it can interact with the poka yoke element 70 of the battery 1.

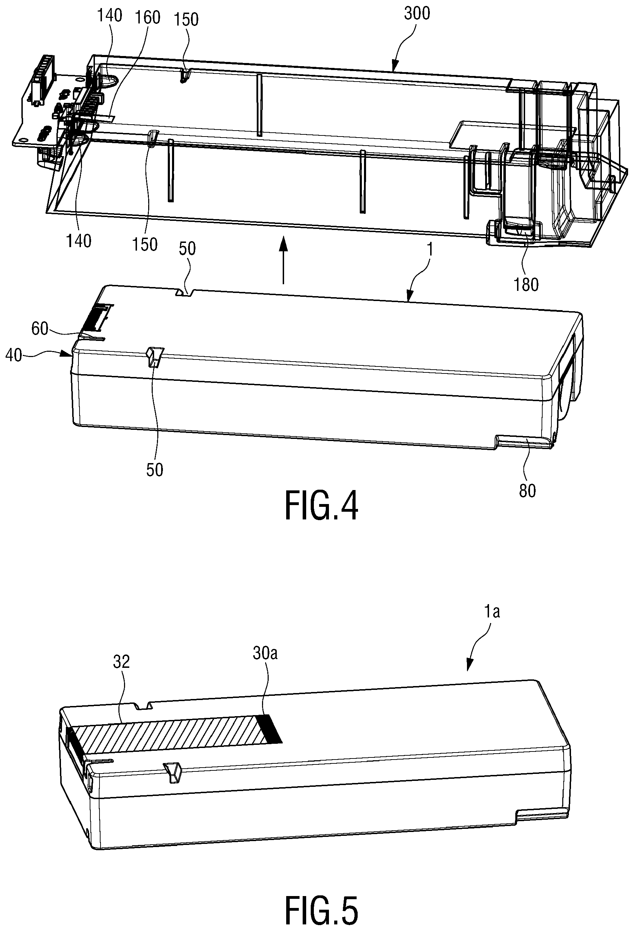

Fig. 4 shows a perspective side view of the first embodiment of the battery 1 and a corresponding embodiment of a battery holder 300 according to the present invention for vertical insertion. For sliding the battery 1 into the battery holder 300 in vertical direction, the locating surface elements 50 and the prepositioning element 60 can provide a poka yoke function since they do not allow a different insertion orientation of the battery 1. At the rear end of the battery holder 300 two snapping hooks 180 hold the battery 1 in place by using the supporting surfaces 80. At the front end of the battery 1, two protruding (e.g., flexing) elements 140 using the bearing surface elements 40 place the battery 1 correctly in the battery holder 300. The snapping hooks 180 and the flexing elements 140 can be blocked by additional features in the closed device (e.g., a battery door). This ensures low insertion and removal forces while having high forces holding the battery 1 in the battery holder 300 during drop and shock impact. The locating surface elements 50 and the corresponding counterpart locating surface elements 150 provide for correct positioning of the battery 1.

It shall be noted that the design, number and arrangement of the various elements of the battery and the battery holder shown in Figs. 1 to 4 are to be understood as examples. Various modifications of these parameters are possible. In the following, some (non-limiting and non-exhaustive) modifications will be illustrated.

Fig. 5 shows a perspective side view of a second embodiment of a battery 1a according to the present invention having a different embodiment of an electrical connector 30a. In this embodiment the connector 30a is located more in the center of the top surface 12. The area 32 of the top surface 12 between the connector 30a and the front surface 10 is formed as recess to provide access to the contact elements of the counterpart connector 130, which may be formed as knife contacts that are accessible in horizontal direction (from the direction of the front surface 10) and in vertical direction (from the direction of the top surface 12). In other embodiments, surface contacts for electrical contacting the counterpart connector of the battery holder may be formed on any of the front surface 10, the top surface 12 and the side surfaces 14, 15.

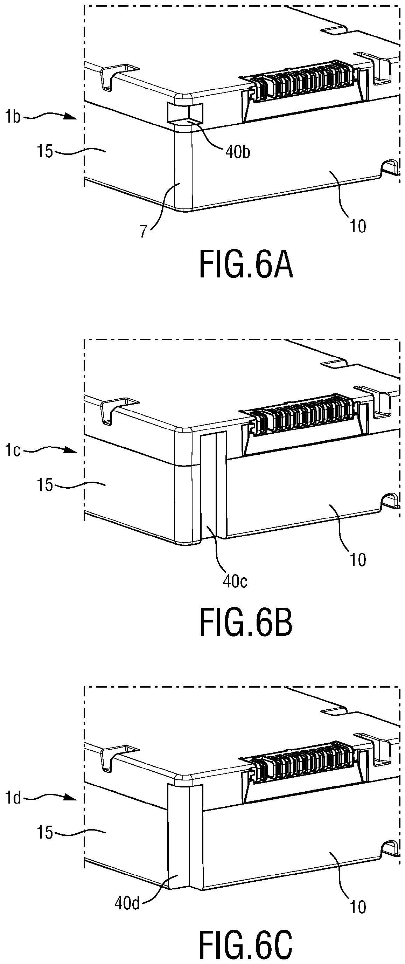

Fig. 6 shows perspective front views of embodiments of a battery according to the present invention having different embodiments of bearing surface elements. The bearing surface element(s) may be used to restricts the movement of the battery in the vertical direction, particularly towards in the downward direction (in Fig. 6). The position of the bearing surface element(s) is variable in vertical direction, e.g. depending on the application. Different design versions are possible. While the first embodiment of the battery 1 shown in Figs. 1 to 4 has a closed bearing surface elements 40, Fig. 6A shows an embodiment of a battery 1b having bearing surface elements 40b that are open to the outside, i.e., that are arranged that the edges (only edge 7 is shown) between the front surface 10 and the adjacent side surfaces 14, 15. Fig. 6B shows an embodiment of a battery 1c having bearing surface elements 40c that are open in downward direction towards the bottom surface 13. Fig. 6C shows an embodiment of a battery 1d having bearing surface elements 40d that are open to the outside and in downward direction towards the bottom surface 13, i.e., that are arranged that the edges (only edge 7 is shown) between the front surface 10 and the adjacent side surfaces 14, 15. In addition or alternatively, the front part of the bottom surface 13 may be used as bearing surface element, particularly if no separate elements are not arranged there.

These embodiments show two bearing surface elements. Other embodiments use a single bearing surface element or more than two bearing surface elements. The bearing surface element(s) thus define the axis of rotation, i.e., the bearing surface element(s) is (are) used for the rotation. Surfaces are required for the vertical installation direction and the rotational insertion. The one or more bearing surface elements may e.g., be configured as one or more recesses and/or protrusions, wherein the counterpart bearing surface elements are configured in the opposite way.

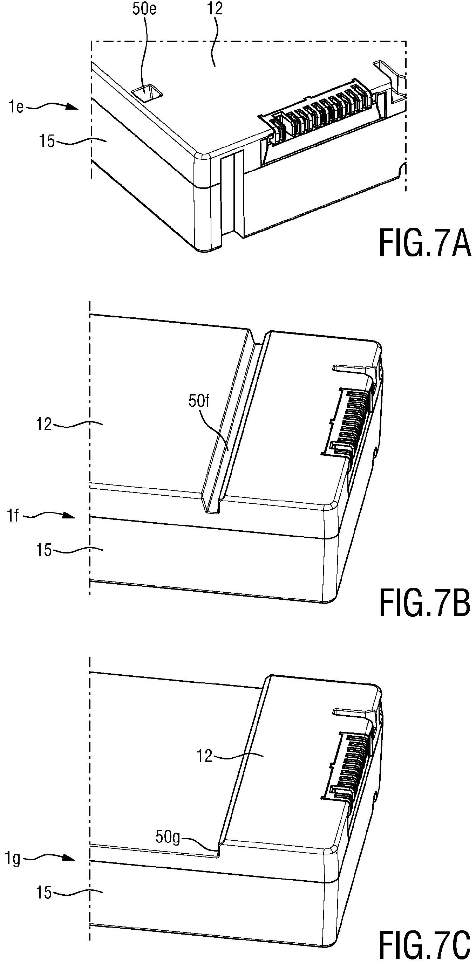

Fig. 7 shows perspective top views of embodiments of a battery according to the present invention having different embodiments of locating surface elements. While the first embodiment of the battery 1 shown in Figs. 1 to 4 has locating surface elements 50 that are open to the outside and are arranged at the edges 3, 4, Fig. 7A shows an embodiment of a battery 1e having locating surface elements 50e that are closed to the outside, i.e., that are located within the top surface 12 at a distance from the edges 3, 4. Fig. 7B shows an embodiment of a battery 1f having a locating surface element 50f that is configured as single continuous element (or segmented if necessary) on the top surface 12, in this example as continuous groove or recess extending from the left side surface 14 to the right side surface 15. Fig. 7C shows an embodiment of a battery 1g having locating surface elements 50g in the form of a step on the top surface 12, i.e., that is open to the rear surface 11. The step 50g extends from the left side surface 14 to the right side surface 15.

These embodiments show one or two locating surface elements. Other embodiments use more locating surface elements or a segmented design with any number of individual locating surface elements. The one or more locating surface elements may e.g., be configured as steps and/or recesses and/or protrusions, wherein the counterpart locating surface elements are configured in the opposite way.

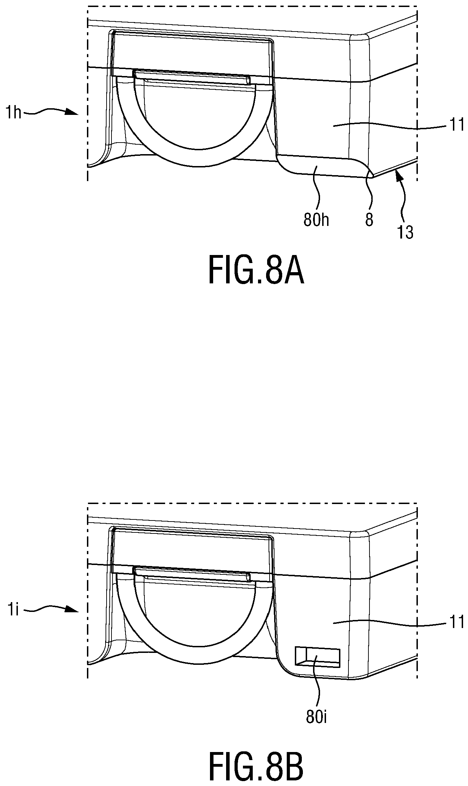

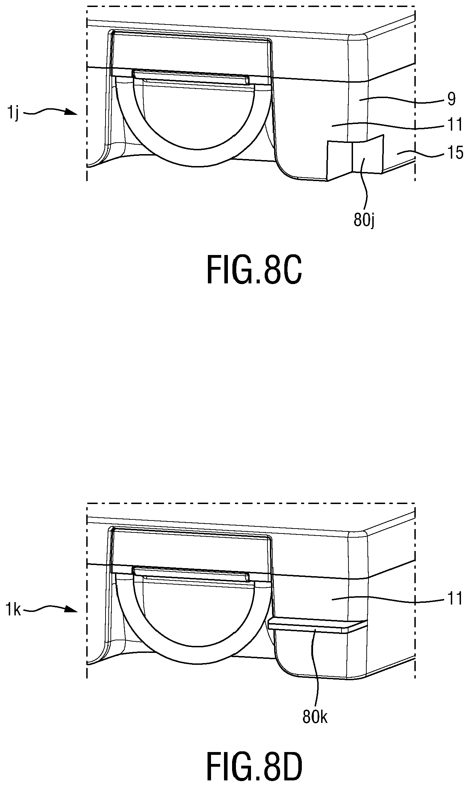

Fig. 8 shows perspective rear views of embodiments of a battery according to the present invention having different embodiments of supporting surface elements. Preferably, the one or more supporting surface elements should be as far as possible from the axis of rotation. They support the battery in vertical direction (like the bearing surface elements) and are particularly useful for the vertical insertion direction movement and the rotation insertion movement. While the first embodiment of the battery 1 shown in Figs. 1 to 4 has supporting surface elements 80 that are arranged sideways at the edges 5 and 6, Fig. 8A shows an embodiment of a battery 1h having supporting surface elements 80h arranged at the edge 8 between the rear surface 11 and the bottom surface 13. Fig. 8B shows an embodiment of a battery 1i having supporting surface elements 80i arranged as recesses with the rear surface 11. Fig. 8C shows an embodiment of a battery 1j having supporting surface elements 80j arranged as recesses at the edges (only edge 9 is shown) between the rear surface 11 and the respective side surface, 14, 15. Fig. 8D shows an embodiment of a battery 1k having supporting surface elements 80k arranged as protrusions on the rear surface 11.

These embodiments show two supporting surface elements. Other embodiments use one or more than two supporting surface elements. The one or more supporting surface elements may be configured supporting surface elements are configured as one or more recesses and/or protrusions and/or inclined surfaces.

The one or more poka yoke elements may be implemented in different ways as well. While the first embodiment of the battery 1 shown in Figs. 1 to 4 has a single poka yoke element 70 in the form of a continuous longitudinal groove on the bottom surface 13, other embodiments have a noncontinuous groove (providing the poka yoke effect later during insertion) or have a poka yoke element on any other any outer surface except the back rear surface 11. The one or more poka yoke elements may be configured as one or more recesses and/or protrusions (e.g. ribs) There may also be multiple poka yoke elements with different profile contours, and the one or more poka yoke elements may integrated into the outer contour of the housing 20 of the battery (e.g. by rounding an edge of the housing).

The one or more prepositioning elements 60 may be configured as one or more recesses and/or protrusions, preferably arranged adjacent to the connector 30 and at a distance from the side surfaces 14, 15 of the battery.

Generally, recesses and protrusions (ribs) representing one or more of the different elements may generally have any profile contour as long as it mates with the profile contour of the counterpart element of the battery holder.

Fig. 9 shows a perspective rear view of another embodiment of a battery 11 according to the present invention having an unlocking protection element comprising snapping hooks 180 and a protrusion 181 at a battery door 182. The snapping hooks 180 can be blocked by the protrusion 181 for fixing the battery on the supporting surface elements 80. This ensures that the battery 1 stays in position when the battery holder is closed despite movements or transport of device with the battery 1 inserted, i.e., to avoid unwanted release of the battery (e.g., when dropping the device) while keeping insert and pull out forces during battery insertion low. The advantage of the snapping hooks 180 is thus mainly increasing reliability of the battery.

In summary, according to the present invention a platform battery is provided which can be used for multiple current and future electrical devices, independent from the battery insertion concept of device. In preferred embodiments, one or more mechanical features are provided which enable a horizontal insertion by sliding into the battery holder, a vertical insertion by a straight translation movement and a rotational insertion.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single element or other unit may fulfill the functions of several items recited in the claims. The mere fact that certain measures are recited in mutually different dependent claims does not indicate that a combination of these measures cannot be used to advantage.

Any reference signs in the claims should not be construed as limiting the scope.

## Claims

1. Battery (1) configured to allow insertion of the battery into a battery holder (100, 200, 300) in two or more different directions, the battery having:
- a housing (20);
- one or more battery cells (21) arranged within the housing;
- an electrical connector (30) comprising a plurality of contact elements (31), the electrical connector being arranged at an edge of the battery between a front surface (10) and a top surface (12) of the battery and being configured to allow electrical contact of counterpart contact elements of a counterpart connector (130 arranged within the battery holder with the contact elements from two different directions; and
- one or more bearing surface elements (40) arranged at the front surface (10) of the battery and configured to mate with one or more counterpart bearing surface elements (140) of the battery holder and to prevent substantial movement of the battery in a direction perpendicular to the top surface in mated condition.

2. Battery according to claim 1,
wherein the one or more bearing surface elements (40) are configured as one or more recesses and/or protrusions arranged within and/or at the front surface (10) at a distance from the top surface (12) and adjacent to or at an edge between the front surface (10) and a side surface (14, 15) of the battery.

3. Battery according to claim 2,
wherein the one or more recesses and/or protrusions extend up to a bottom surface (13) and/or the top surface (12) and/or a side surface (14, 15) of the battery.

4. Battery according to any of the preceding claims,
further comprising one or more locating surface elements (50) arranged at a top surface (12) and/or a side surface (14, 15) of the battery and configured to mate with one or more counterpart locating surface elements (150) of the battery holder and to prevent substantial movement of the battery in a direction perpendicular to the front surface in mated condition.

5. Battery according to claim 4,
wherein the one or more locating surface elements (50) are configured as one or more steps and/or recesses and/or protrusions arranged within or at the top surface (12) and/or a side surface (14, 15) at a distance from the front surface (10) and adjacent to or at an edge between the top surface (12) and a side surface (14, 15).

6. Battery according to any of the preceding claims,
further comprising one or more prepositioning elements (60) arranged at the edge of the battery between the front surface (10) and the top surface (12) of the battery and configured to mate with one or more counterpart prepositioning elements of the battery holder before the connector of the battery mates with the counterpart connector of the battery holder when inserting the battery into the battery holder.

7. Battery according to claim 6,
wherein the one or more prepositioning elements (60) are configured as one or more recesses and/or protrusions arranged adjacent to the connector and at a distance from the side surfaces (14, 15) of the battery.

8. Battery according to any of the preceding claims,
further comprising one or more poka yoke elements (70) arranged at one or more surfaces of the battery and configured to mate with one or more counterpart poka yoke elements (170) of the battery holder and to prevent incorrect insertion of the battery into the battery holder.

9. Battery according to claim 8,
wherein the one or more poka yoke elements (70) are arranged at the top surface (12) and/or a bottom surface (13) and/or a side surface (14, 15) of the battery, extending in a direction perpendicular to the front surface (10) of the battery.

10. Battery according to claim 8 or 9,
wherein the one or more poka yoke elements (70) are configured as one or more recesses and/or protrusions arranged within or on top of the top surface (12) and/or the bottom surface (13) and/or the side surface (14, 15) and extending from the front surface (10) up to a rear surface (11) of the battery or ending before the rear surface.

11. Battery according to any of the preceding claims,
further comprising one or more supporting surface elements (80) arranged at a rear surface (11) and/or at a bottom surface (13) and/or at a side surface (14, 15) of the battery, in particular adjacent to the rear surface (11), and configured to mate with one or more counterpart supporting surface elements (180) of the battery holder and to prevent substantial movement of the battery in a direction perpendicular to the bottom surface (13) and/or a side surface (14, 15) of the battery in mated condition.

12. Battery according to claim 11,
wherein the one or more supporting surface elements (80) are configured as one or more recesses and/or protrusions and/or inclined surfaces.

13. Battery according to any of the preceding claims,
further comprising one or more pull out elements (90) arranged at a rear part of the battery and configured to pull the battery out of the battery holder.

14. Battery according to any of the preceding claims,
wherein the battery has a substantially cuboid or prismatic shape or a shape of a parallelepiped or a frustum.

15. Battery holder (100, 200, 300) configured to allow insertion of a battery (1) according to any one of the preceding claims into the battery holder in two or more different directions, the battery holder having:
- a battery compartment (120) configured to hold the battery;
- an electrical counterpart connector (130) comprising a plurality of contact elements, the electrical counterpart connector being arranged at a rear surface of the battery compartment, a bottom surface of the battery compartment, a side surface of the battery compartment or an edge of the battery compartment between the rear surface and the bottom surface and being configured to make electrical contact of the counterpart contact elements with contact elements of a connector of the battery when the battery is inserted into the battery compartment; and
- one or more counterpart bearing surface elements (140) arranged at the rear surface of the battery compartment and configured to mate with one or more bearing surface elements of the battery and to prevent substantial movement of the battery in a direction perpendicular to the bottom surface in mated condition.
